# EUROPEAN PATENT APPLICATION

(11) **EP 4 811 809 A1**
(43) Date of publication of application: **23.09.2026**
(21) Application number: 26162426.6
(22) Date of filing: 04.03.2026
(51) Int. Cl.: H04N 23/695

(54) **METHODS AND SYSTEMS FOR OPERATING A PTZ CAMERA HAVING MULTIPLE PRESET POSITIONS**

(30) Priority: 20.03.2025 US 202519085395
(71) Applicant: Honeywell International Inc., Charlotte, NC 28202 (US)
(72) Inventor: JAIN, Abhishek, Charlotte, 28202 (US); GREWAL, Amit Kumar, Charlotte, 28202 (US); HEGDE, Ganesh Ramesh, Charlotte, 28202 (US); GUNTIPALLI, Giri, Charlotte, 28202 (US)
(74) Representative: Haseltine Lake Kempner LLP

(57) **Abstract**

Methods and systems for operating a Pan-Tilt-Zoom (PTZ) video camera include storing preset positions and associated parameters. The parameters include Pan, Tilt, Zoom settings and video processing parameters for each preset position. When activated, the PTZ camera orients to achieve a Field-Of-View corresponding to a preset position's settings. The camera captures and processes video using position-specific video processing parameters, creating processed video streams stored in a Video Management System. The video processing parameters may include resolution, frame rate, bit rate, quality, compression, encoding and analytics settings. The system can display multiple processed video streams concurrently and switch between preset positions based on analytics results. The system also supports audio output selection and video retention policies for each preset position.

## Description

### TECHNICAL FIELD

The present disclosure relates generally to PTZ (Pan, Tilt, Zoom) cameras, and more particularly to PTZ cameras having multiple presets positions.

### BACKGROUND

Some PTZ cameras are automatically moved between each of a plurality of defined preset positions that each capture a unique Field-Of-View (FOV) of a facility. During operation, such a PTZ camera typically sequentially move between each of the FOV's of the plurality of defined preset positions, often remaining at each preset position for a fixed dwell time. When so provided, the PTZ camera typically outputs a single video stream that captures, in sequence, each of the FOV's corresponding to the plurality of defined preset positions. In many cases, the video stream from the PTZ camera is displayed on a single window of an operator console assigned to the PTZ camera. Because the particular FOV that is displayed in the single window of the operator console changes over time, an operator viewing the video stream can lose context as to which FOV is currently being displayed, making it more difficult for the operator to analyze events occurring in the facility. What would be desirable are methods and systems for improving the operation of a PTZ camera that has a plurality of defined preset positions, and for improving the display of video captured by the PTZ camera to provide more context to a viewing operator.

### SUMMARY

The present disclosure relates generally to PTZ cameras, and more particularly to PTZ cameras having multiple presets. An example may be found in a method for operating a Pan-Tilt-Zoom (PTZ) video camera that is configured to capture a video. The illustrative method includes storing a plurality of preset positions of the PTZ video camera, where each of the plurality of preset positions of the PTZ video camera includes a respective Field-Of-View (FOV). A plurality of parameters are stored for each of the plurality of preset positions including a Pan setting, a Tilt setting, a Zoom setting, and one or more video processing parameters. During operation, a first one of the plurality of preset positions is activated, and in response, the Pan setting, the Tilt setting and the Zoom setting associated with the first one of the plurality of preset positions are applied to the PTZ video camera to orient the PTZ video camera to achieve the respective FOV. Video of the respective FOV is captured by the PTZ video camera. The video captured by the PTZ video camera is processed by applying the one or more video processing parameters associated with the first one of the plurality of preset positions, resulting in a first processed video stream. The first processed video stream is stored and/or displayed by a Video Management System.

Another example may be found in a video management system. The illustrative video management system includes a Pan-Tilt-Zoom (PTZ) video camera that is configured to capture a video, and a controller for controlling the PTZ video camera. The controller is configured to store a plurality of preset positions of the PTZ video camera, wherein each of the plurality of preset positions of the PTZ video camera results in capturing a respective Field-Of-View (FOV). The controller is configured to store a plurality of parameters for each of the plurality of preset positions including a Pan setting, a Tilt setting, a Zoom setting, and one or more video processing parameters. During operation, the controller is configured to activate a first one of the plurality of preset positions, and in response, apply the Pan setting, the Tilt setting and the Zoom setting associated with the first one of the plurality of preset positions to the PTZ video camera to orient the PTZ video camera to achieve the respective FOV. The controller is configured to capture video of the respective FOV by the PTZ video camera and to process the video captured by the PTZ video camera by applying the one or more video processing parameters associated with the first one of the plurality of preset positions, resulting in a first processed video stream. The controller is configured to store and/or display the first processed video stream.

Another example may be found in a non-transitory, computer-readable store medium that stores instructions. When the instructions are executed by one or more processors, the one or more processors are caused to store a plurality of preset positions of a PTZ video camera, wherein each of the plurality of preset positions of the PTZ video camera results in capturing a respective Field-Of-View (FOV). The one or more processors are caused to store a plurality of parameters for each of the plurality of preset positions including a Pan setting, a Tilt setting, a Zoom setting, and one or more video processing parameters. The one or more video processing parameters for at least one of the plurality of preset positions include one or more of a video resolution parameter, a Frame Per Second (FPS) parameter, a bit rate parameter, a video quality parameter, a video compression parameters, a video encoding parameter, and a video analytics parameter that identifies a video analytics algorithm from a plurality of predetermined video analytics algorithm. The one or more processors are caused to activate a first one of the plurality of preset positions, and in response, apply the Pan setting, the Tilt setting and the Zoom setting associated with the first one of the plurality of preset positions to the PTZ video camera to orient the PTZ video camera to achieve the respective FOV. The one or more processors are caused to capture video of the respective FOV by the PTZ video camera and to process the video captured by the PTZ video camera by apply the one or more video processing parameters associated with the first one of the plurality of preset positions, resulting in a first processed video stream. The one or more processors are caused to store and/or display the first processed video stream.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### BRIEF DESCRIPTION OF THE FIGURES

The disclosure may be more completely understood in consideration of the following description of various examples in connection with the accompanying drawings, in which:
Figure 1 is a schematic block diagram showing an illustrative Video Management System (VMS) that includes a PTZ camera;
Figures 2A, 2B and 2C are flow diagrams that together show an illustrative method for operating the PTZ camera of the illustrative surveillance system of Figure 1;
Figure 3 is a schematic diagram showing an illustrative PTZ camera having a plurality of preset positions, wherein each of the plurality of preset positions is treated as a different virtual camera and is displayed in a different window on an operator console;
Figures 4A is a schematic diagram showing an illustrative PTZ camera having a plurality of preset positions;
Figures 4B, 4C, and 4D are schematic diagrams showing illustrative parameters stored for each of the plurality of preset positions of the PTZ camera of Figure 4A, wherein each of the plurality of preset positions is assigned to and treated as a different virtual camera;
Figure 5 is a schematic diagram showing an illustrative PTZ camera having a plurality of preset positions; and
Figure 6 is a schematic diagram showing an illustrative PTZ camera having a plurality of preset positions;
While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

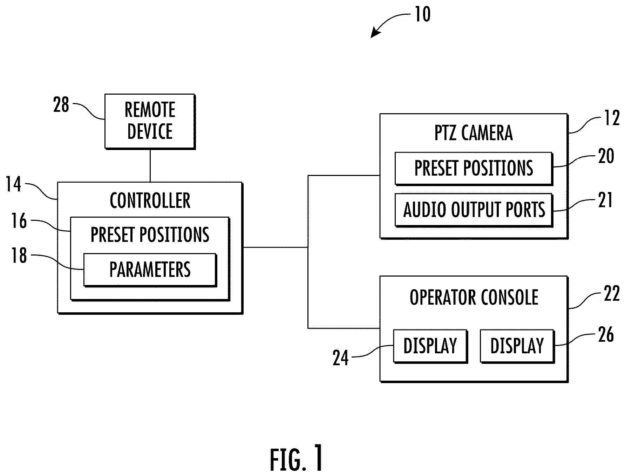

Figure 1 is a schematic block diagram showing an illustrative Video Management System (VMS) 10. The VMS 10 includes a Pan-Tilt-Zoom (PTZ) video camera 12 that is configured to capture a video. The PTZ video camera 12 is operatively coupled to a controller 14. In some cases, the VMS 10 may include a number of PTZ cameras 12, even though only a single PTZ camera 12 is shown in Figure 1. In the example show, the controller 14 is configured to store a plurality of preset positions 16 of the PTZ video camera 12, wherein each of the plurality of preset positions 16 of the PTZ video camera 12 results in capturing a respective Field-Of-View (FOV). The controller 14 is configured to store a plurality of parameters 18 for each of the plurality of preset positions 16 including a Pan setting, a Tilt setting, a Zoom setting, and in some case one or more video processing parameters.

During operation, the controller 14 is configured to activate a first one of the plurality of preset positions 16, and in response, apply the Pan setting, the Tilt setting and the Zoom setting associated with the first one of the plurality of preset positions 16 to the PTZ video camera 12 to orient the PTZ video camera 12 to achieve the respective FOV. In some cases, the PTZ camera 12 includes a number of preset positions 20, which may be stored within the PTZ camera 12 or which may be received from the controller 14 and locally stored. In some cases, the preset positions 20 may represent local copies of at least some of the preset positions 16 that are stored by the controller 14. In some cases, the PTZ camera 12 may include a plurality of audio output ports 21. In some cases, different one of the plurality of audio output ports 21 may be associated with a different one of the plurality of preset positions 16.

In some cases, the VMS 10 may include an operator console 22 that is operably coupled with the PTZ camera 12 and/or the controller 14. The operator console 22 may be configured to allow an operator to view video streams and to enter commands to the VMS 10. In some cases, the operator console 22 may include at least a first display 24 and a second display 26 that may be used for displaying video streams and/or still images captured by a video stream, for example. In some cases, at least one of the first display 24 and the second display 26 may be used to display a calendar view of camera images in which each camera image is labeled with the date and time that a particular camera image was captured. In some cases, at least one of the first display 24 and the second display 26 may be used to display a timeline view of camera images in which date/time extends across the horizontal axis and recording times for each of a number of cameras may be displayed along the timeline.

In some cases, the controller 14 may be configured to capture video of the respective FOV by the PTZ video camera 12, process the video captured by the PTZ video camera 12 by applying the one or more video processing parameters 18 associated with a first one of the plurality of preset positions 16, resulting in a first processed video stream, and store and/or display the first processed video stream. The controller 14 may change the FOV of the PTZ video camera 12 to a second one of the plurality of preset positions 16, capture video of the respective FOV by the PTZ video camera 12, process the video captured by the PTZ video camera 12 by applying the one or more video processing parameters 18 associated with the second one of the plurality of preset positions 16, resulting in a second respective processed video stream, and store and/or display the second respective processed video stream. In some cases, the VMS 10 may concurrently display the first processed video stream in a first window on a display 24 of the operator console 22 and the second processed video stream in a second window on the display 24 of the operator console 22. In this, each of the plurality of preset positions 16 of the PTZ camera 12 may be considered a separate "virtual video camera". By providing the video stream captured at each of the plurality of preset positions 16 in separate dedicated windows on the operator console 22, an operator viewing the video streams from the PTZ camera 12 can better maintain the context as to which FOV is currently being displayed, making it easier for the operator to quickly and accurately analyze events occurring in the facility.

In some cases, the controller 14 may be housed by the PTZ camera 12. In some cases, the controller 14 may be separate from the PTZ camera 12. In some cases, the controller 14, or at least the functionality of the controller 14, may be distributed between the PTZ video camera 12, the controller 14 and/or a remote device 28. In some cases, the one or more video processing parameters for each of at least one of the plurality of preset positions 16 may include a preset identifier that may be used to identify which of a plurality of windows on the display of an operator console to display the corresponding video. Alternatively, or in addition, the one or more video processing parameters for each of at least one of the plurality of preset positions 16 may include one or more of a video resolution parameter, a Frame Per Second (FPS) parameter, a bit rate parameter, a video quality parameter, a video compression parameters, and a video encoding parameter. In some cases, the one or more video processing parameters for at least one of the plurality of preset positions 16 may include a video analytics parameter that identifies a video analytic algorithm from a plurality of predetermined video analytic algorithms, wherein processing the video captured by the PTZ video camera 12 includes applying the respective video analytic algorithm to the video captured by the PTZ video camera 12, resulting in a respective video analytics result.

Examples of codec parameters include a compression type such as H264 or H265 or JPEG and others, resolution such as 1080p, 720p, 640x480 and others, frames per second, GOP, bitrate type such as CBR (constant bitrate) or VBR (variable bitrate), max bitrate, and image quality including low, medium, or high. Exposure parameters include brightness, saturation, contrast, sharpness, exposure mode such as auto or manual, shutter speed including white balance, and day/night settings. Recording configurations may include recording type such as continuous, event, i-frames only, and others. Recording configurations may include retention period, archival period, recording location, and retention and archival location. Schedule configurations may include peek time recording, weekend only recording, specific time and duration, and others. Analytics configurations may include which regions to apply video analytics, analytics type, sensitivity level, and others.

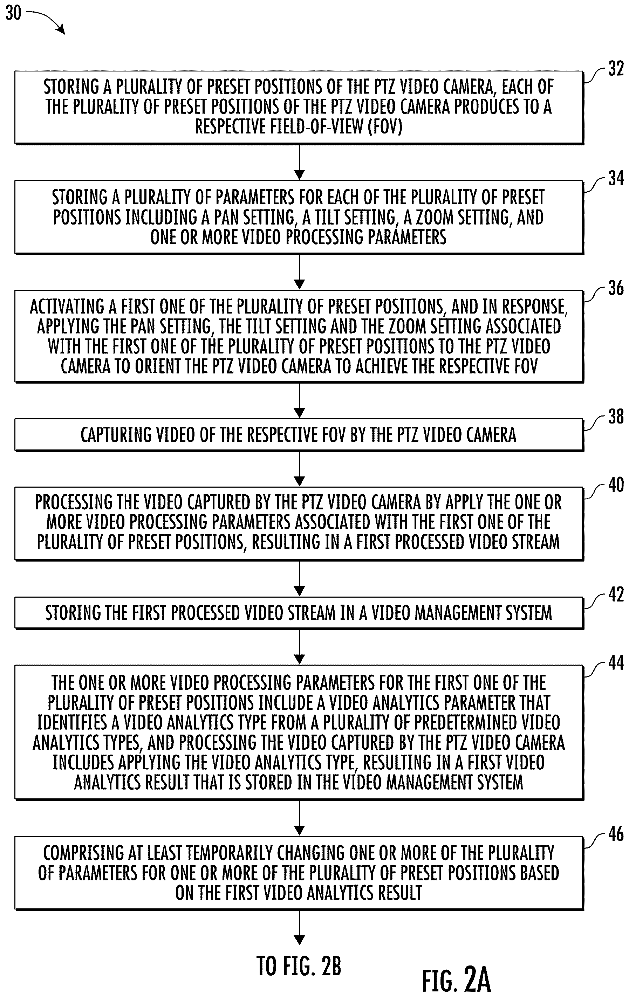

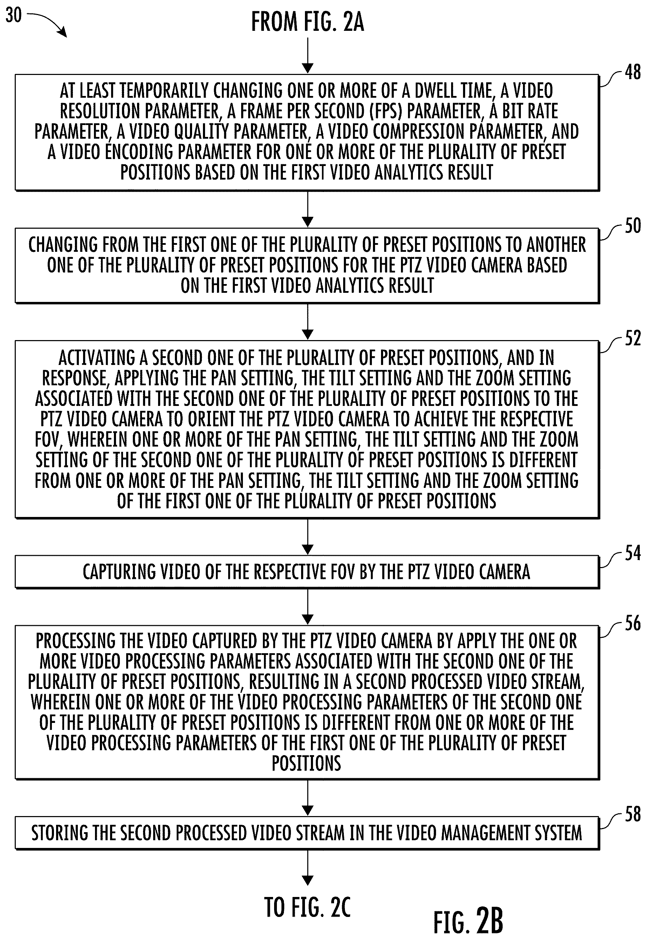

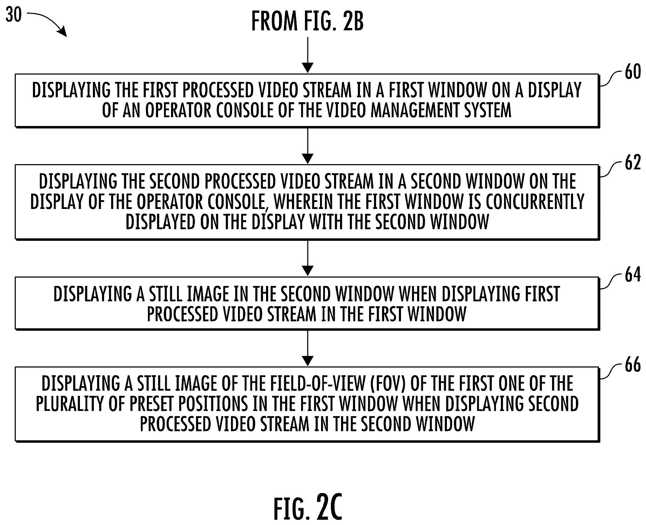

Figures 2A, 2B, and 2C are flow diagrams that together show an illustrative method 30 for operating a Pan-Tilt-Zoom (PTZ) video camera (such as the PTZ camera 12) that is configured to capture a video. The illustrative method 30 includes storing a plurality of preset positions for the PTZ video camera, wherein each of the plurality of preset positions of the PTZ video camera produce a respective Field-Of-View (FOV), as indicated at block 32. A plurality of parameters are stored for each of the plurality of preset positions including a Pan setting, a Tilt setting, a Zoom setting, and in some cases, one or more video processing parameters, as indicated at block 34. In some cases, the plurality of parameters for each of the plurality of preset positions may include a dwell time parameter that defines a dwell time that the PTZ video camera will remain before activating a subsequent one of the plurality of preset positions. In some cases, the dwell time by be dynamic and may be adjusted based on events occurring in the current FOV. For example, if an event of interest is occurring in the current FOV, the dwell time of the current preset may be automatically extended. The event of interest may be detected by a video analytics algorithm associated with the current preset, an external system such as a fire alarm system, another PTZ camera, or the like.

During operation, a first one of the plurality of preset positions is activated, and in response, the Pan setting, the Tilt setting and the Zoom setting associated with the first one of the plurality of preset positions are applied to the PTZ video camera to orient the PTZ video camera to achieve the respective FOV, as indicated at block 36. Video of the respective FOV is captured by the PTZ video camera, as indicated at block 38. The video captured by the PTZ video camera is processed by apply the one or more video processing parameters associated with the first one of the plurality of preset positions, resulting in a first processed video stream, as indicated at block 40. The first processed video stream is stored and/or displayed in a Video Management System, as indicated at block 42.

In some cases, the one or more video processing parameters for the first one of the plurality of preset positions may include a preset identifier that may be used to identify which of a plurality of windows on a display of an operator console to display the corresponding video. Alternatively, or in addition, the one or more video processing parameters for the first one of the plurality of preset positions may include one or more of a video resolution parameter, a Frame Per Second (FPS) parameter, a bit rate parameter, a video quality parameter, a video compression parameters, and a video encoding parameter. In some cases, the one or more video processing parameters for at least one of the plurality of preset positions may include two or more of a video resolution parameter, a Frame Per Second (FPS) parameter, a bit rate parameter, a video quality parameter, a video compression parameters, and a video encoding parameter. In some cases, the one or more video processing parameters for the first one of the plurality of preset positions include may a video analytics parameter that identifies a video analytics algorithm from a plurality of predetermined video analytics algorithms, and processing the video stream may include applying the identified video analytics algorithm, resulting in a first video analytics result that may be stored by the Video Management System, as indicated at block 44. In some cases, the illustrative method 30 may include at least temporarily changing one or more of the plurality of parameters for one or more of the plurality of preset positions based on the first video analytics result, as indicated at block 46.

Continuing on Figure 2B, the illustrative method 30 may include at least temporarily changing one or more of a dwell time, a video resolution parameter, a Frame Per Second (FPS) parameter, a bit rate parameter, a video quality parameter, a video compression parameter, and a video encoding parameter for one or more of the plurality of preset positions based on the first video analytics result, as indicated at block 48. In some cases, the method 30 may include changing from the first one of the plurality of preset positions to another one of the plurality of preset positions for the PTZ video camera based on the first video analytics result, as indicated at block 50.

In some cases, the method 30 may include activating a second one of the plurality of preset positions, and in response, applying the Pan setting, the Tilt setting and the Zoom setting associated with the second one of the plurality of preset positions to the PTZ video camera to orient the PTZ video camera to achieve the respective FOV, wherein one or more of the Pan setting, the Tilt setting and the Zoom setting of the second one of the plurality of preset positions is different from one or more of the Pan setting, the Tilt setting and the Zoom setting of the first one of the plurality of preset positions, as indicated at block 52. Video of the respective FOV may be captured by the PTZ video camera, as indicated at block 54. The video captured by the PTZ video camera may be processed by apply the one or more video processing parameters associated with the second one of the plurality of preset positions, resulting in a second processed video stream, wherein one or more of the video processing parameters of the second one of the plurality of preset positions is different from one or more of the video processing parameters of the first one of the plurality of preset positions, as indicated at block 56. The second processed video stream may be stored by the Video Management System, as indicated at block 58. In some cases, the frame rate can be adjusted dynamically based on the speed of camera movement when switching between preset positions. This may help to capture clear images from the PTZ camera even when the camera is in a high speed mode.

Continuing on Figure 2C, the illustrative method 30 may include displaying the first processed video stream in a first window on a display of an operator console of the Video Management System, as indicated at block 60. The method 30 may include displaying the second processed video stream in a second window on the display of the operator console, wherein the first window is concurrently displayed on the operator console with the second window, as indicated at block 62. In some cases, the first processed video stream may be displayed in the first window before the second processed video stream is displayed in the second window.

In some cases, the method 30 may include displaying a still image in the second window when displaying first processed video stream in the first window, as indicated at block 64. In some cases, a still image of the Field-Of-View (FOV) of the first one of the plurality of preset positions may be displayed in the first window when displaying second processed video stream in the second window, as indicated at block 66. In some cases, the still image that is displayed in the second window when displaying the first processed video stream in the first window may include a still image of the Field-Of-View (FOV) of the second one of the plurality of preset positions. In some cases, the still image that is displayed in the first window when displaying second processed video stream in the second window may include a still image of the Field-Of-View (FOV) of the first one of the plurality of preset positions.

In some cases, the plurality of parameters for each of the plurality of preset positions may include an audio output port identifier that identifies a respective one of a plurality of audio output ports of the PTZ video camera for directing an audio output signal from the Video Management System while the respective one of the plurality of preset positions is activated. In some cases, the plurality of parameters for each of the plurality of preset positions may include a video retention policy for retaining the respective stored processed video stream in the Video Management System.

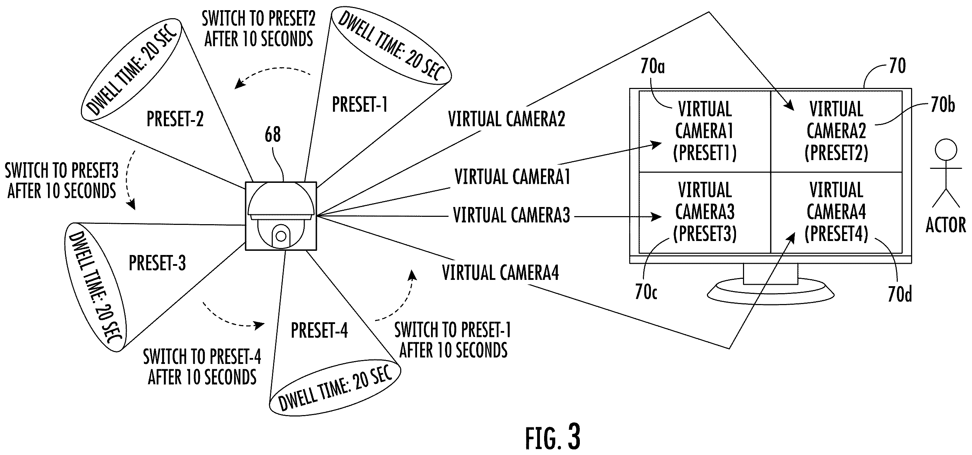

Figure 3 is a schematic diagram showing an illustrative PTZ camera 68 that provides video to a display 70. The PTZ camera 68 may be considered as being an example of the PTZ camera 12. As shown, the PTZ camera 68 has a preset 1, a preset 2, a preset 3, and a preset 4, with a twenty second dwell time at each of the preset positions, and a ten second switch between each of the presets. While a total of four presets are shown, this is merely illustrative. Video captured at the preset 1 is displayed in a display segment 70a of the operator console. Video captured at the preset 2 is displayed in a display segment 70b. Video captured at the preset 3 is displayed in a display segment 70c. Video captured at the preset 4 is displayed in a display segment 70d. The PTZ camera 68 may have a unique set of parameter values for each of the preset 1, the preset 2, the preset 3, and the preset 4. This may include a preset-based codec configuration and preset-based exposure settings, each of which may be stored within or communicated to the PTZ camera 68. These are just examples. In some cases, the unique set of parameter values for each of the presets may include a preset-based recycling parameter that specifies how many video streams for the corresponding preset are retained before recording over the previous video streams (e.g. in a First in First Out basis). In some cases, the unique set of parameter values for each of the presets may include a preset-based archiving parameter that specifies how long video streams for the corresponding preset must be archived. In some cases, the unique set of parameter values for each of the presets may include a preset-based recording schedule that specifies a recording schedule for recording the video streams for the corresponding preset. In some cases, the unique set of parameter values for each of the presets may include a preset-based rules and event association that specify one or more changes to one or more of the parameter values based on a detected condition or event (e.g. a detected condition or event of a video analytics algorithm running on the video stream of the PTZ camera 68 and/or an event detected by an external system such as a fire alarm system, another PTZ camera, or the like). In some cases, the unique set of parameter values for each of the presets may include a preset priority, which may identify which preset to assumed in response to a detected condition or event (e.g. a detected condition or event of a video analytics algorithm running on the video stream of the PTZ camera 68 and/or an event detected by an external system such as a fire alarm system, another PTZ camera, or the like).

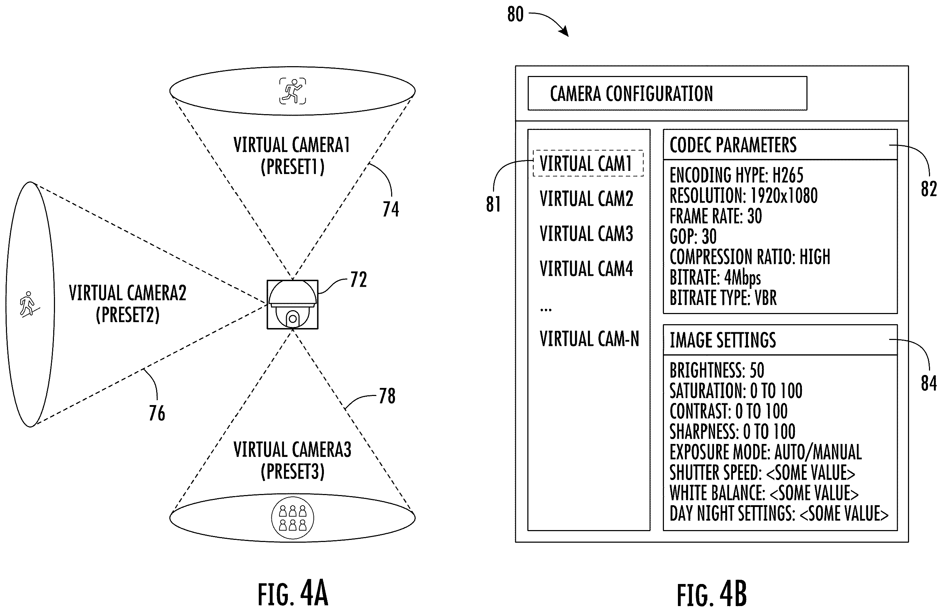

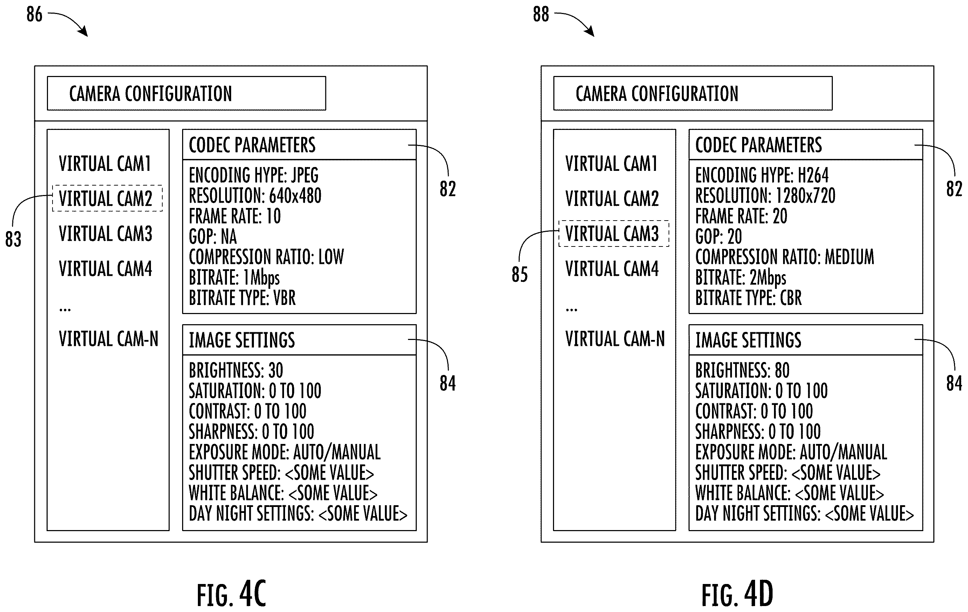

Figures 4A is a schematic diagram showing an illustrative PTZ camera 72 having a plurality of preset positions, and Figures 4B, 4C, and 4D are schematic diagrams showing illustrative parameters stored for each of the plurality of preset positions of the PTZ camera of Figure 4A, wherein each of the plurality of preset positions is assigned to and treated as a different virtual camera. The illustrative PTZ camera 72 that includes a preset 74, a preset 76, and a preset 78. While a total of three presets are shown, this is merely illustrative. The PTZ camera 72 may be an example of the PTZ camera 12. Each of the presets 74, 76, and 78 may have different preset-based parameter values. Figure 4B is a listing 80 of camera configuration settings that correspond to the preset 74. The VIRTUAL CAM1 81 is highlighted, indicating that these settings are for the preset 74. As can be seen, preset 74 is treated as a virtual camera-1. The listing 80 includes codex parameters 82 including encoding type, resolution, frame rate, GOP (Group Of Pictures), compression ratio, BITRATE and BITRATE Type. The listing 80 also includes image settings 84 including brightness, saturation, contrast, sharpness, exposure mode, shutter speed, white balance and day night settings. These are just examples.

Figure 4C is a listing 86 of camera configuration settings that correspond to the preset 76. The VIRTUAL CAM2 83 is highlighted, indicating that these settings are for the preset 76. As can be seen, preset 76 is treated as a virtual camera-2. The listing 86 includes codex parameters 82 including encoding type, resolution, frame rate, GOP (Group Of Pictures), compression ratio, BITRATE and BITRATE Type. The listing 86 also includes image settings 84 including brightness, saturation, contrast, sharpness, exposure mode, shutter speed, white balance and day night settings.

Figure 4D is a listing 88 of camera configuration settings that correspond to the preset 78. The VIRTUAL CAM3 85 is highlighted, indicating that these settings are for the preset 78. As can be seen, preset 78 is treated as a virtual camera-3. The listing 88 includes codex parameters 82 including encoding type, resolution, frame rate, GOP (Group Of Pictures), compression ratio, BITRATE and BITRATE Type. The listing 88 also includes image settings 84 including brightness, saturation, contrast, sharpness, exposure mode, shutter speed, white balance and day night settings. Each of the virtual cameras may be displayed in a separate window on an operator console.

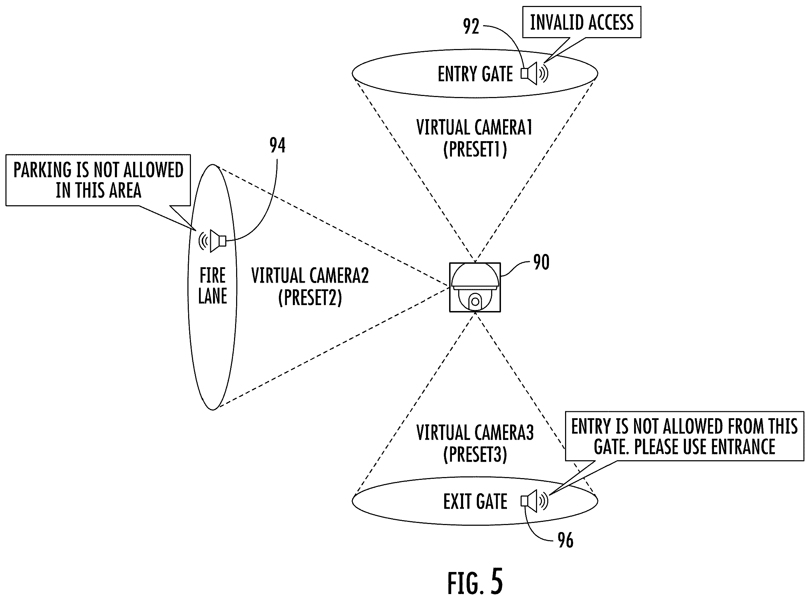

Figure 5 is a schematic diagram showing an illustrative PTZ camera 90 that may be considered as being an example of the PTZ camera 12. The PTZ camera 90 has a first preset that includes an entry gate in its FOV. A loudspeaker 92 that is located at or near the entry gate may announce "invalid access", or something similar, if a person is seen near the entry gate. The PTZ camera 90 has a second preset that includes a fire lane in its FOV. A loudspeaker 94 that is located at or near the fire lane may announce "parking is not allowed in this area", or something similar, if a parked car is detected. The PTZ camera 90 has a third preset that includes an exit gate in its FOV. A loudspeaker 96 that is located at or near the exit gate may announce "entry is not allowed at this gate" or something similar if a person is attempting to enter through the exit gate. These messages may be predetermined, and the PTZ camera 90 may output a particular audio message corresponding to a particular preset. In some cases, the messages may be generated live by a person at the operator console 22. While a total of three presets are shown, this is merely illustrative. The PTZ camera 90 may have a first audio output port that is operatively coupled to speaker 92, a second audio output port that is operatively coupled to speaker 94, and a third audio output port that is operatively coupled to speaker 96.

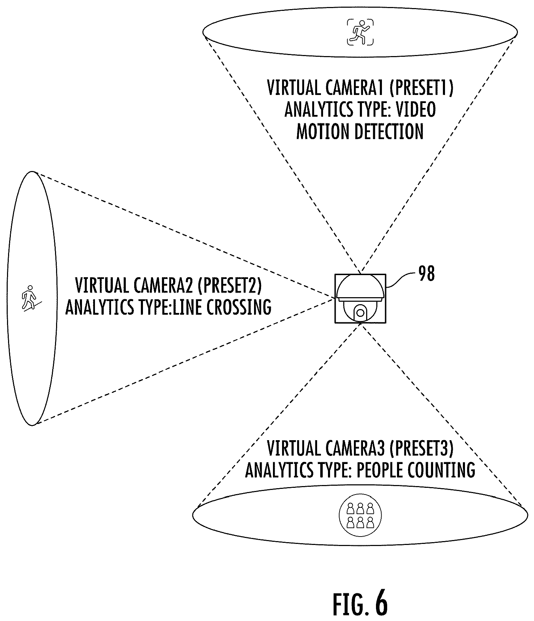

Figure 6 is a schematic diagram showing an illustrative PTZ camera 98 that may be considered as being an example of the PTZ camera 12. The PTZ camera 98 has a first preset that is associated with a video motion detection analytics algorithm, a second preset that is associated with line crossing analytics algorithm, and a third preset that is associated with people counting analytics algorithm. These are merely examples. Each of the presets may be associated with different video analytics algorithms, depending on what is desired to be detected within the particular FOV corresponding to each of the different presets. While a total of three presets are shown, this is merely illustrative.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for operating a Pan-Tilt-Zoom (PTZ) video camera that is configured to capture a video, comprising:
storing a plurality of preset positions of the PTZ video camera, each of the plurality of preset positions of the PTZ video camera produces to a respective Field-Of-View (FOV);
storing a plurality of parameters for each of the plurality of preset positions including a Pan setting, a Tilt setting, a Zoom setting, and one or more video processing parameters;
activating a first one of the plurality of preset positions, and in response, applying the Pan setting, the Tilt setting and the Zoom setting associated with the first one of the plurality of preset positions to the PTZ video camera to orient the PTZ video camera to achieve the respective FOV;
capturing video of the respective FOV by the PTZ video camera;
processing the video captured by the PTZ video camera by applying the one or more video processing parameters associated with the first one of the plurality of preset positions, resulting in a first processed video stream; and
storing the first processed video stream by a Video Management System.

2. The method of claim 1, wherein the one or more video processing parameters for at least one of the plurality of preset positions include one or more of a video resolution parameter, a Frame Per Second (FPS) parameter, a bit rate parameter, a video quality parameter, a video compression parameters, and a video encoding parameter; and/or
wherein the one or more video processing parameters for at least one of the plurality of preset positions include two or more of a video resolution parameter, a Frame Per Second (FPS) parameter, a bit rate parameter, a video quality parameter, a video compression parameters, and a video encoding parameter.

3. The method of any preceding claim, wherein the plurality of parameters for each of the plurality of preset positions includes a dwell time parameter that defines a dwell time that the PTZ video camera will remain before activating a subsequent one of the plurality of preset positions.

4. The method of any preceding claim, wherein the one or more video processing parameters for the first one of the plurality of preset positions include a video analytics parameter that identifies a video analytics algorithm from a plurality of predetermined video analytics algorithms, wherein processing the video captured by the PTZ video camera includes applying the video analytics algorithm, resulting in a first video analytics result, and wherein the first video analytics result is stored in the Video Management System.

5. The method of claim 4, comprising at least temporarily changing one or more of the plurality of parameters for one or more of the plurality of preset positions based on the first video analytics result.

6. The method of claim 5, comprising at least temporarily changing one or more of a dwell time, a video resolution parameter, a Frame Per Second (FPS) parameter, a bit rate parameter, a video quality parameter, a video compression parameter, and a video encoding parameter for one or more of the plurality of preset positions based on the first video analytics result.

7. The method of claim 4, comprising changing from the first one of the plurality of preset positions to another one of the plurality of preset positions for the PTZ video camera based on the first video analytics result.

8. The method of any preceding claim, comprising:
activating a second one of the plurality of preset positions, and in response, applying the Pan setting, the Tilt setting and the Zoom setting associated with the second one of the plurality of preset positions to the PTZ video camera to orient the PTZ video camera to achieve the respective FOV, wherein one or more of the Pan setting, the Tilt setting and the Zoom setting of the second one of the plurality of preset positions is different from one or more of the Pan setting, the Tilt setting and the Zoom setting of the first one of the plurality of preset positions;
capturing video of the respective FOV by the PTZ video camera;
processing the video captured by the PTZ video camera by apply the one or more video processing parameters associated with the second one of the plurality of preset positions, resulting in a second processed video stream, wherein one or more of the video processing parameters of the second one of the plurality of preset positions is different from one or more of the video processing parameters of the first one of the plurality of preset positions; and
storing the second processed video stream in the Video Management System.

9. The method of claim 8, comprising
displaying the first processed video stream in a first window on a display of an operator console of the Video Management System; and
displaying the second processed video stream in a second window on the display of the operator console, wherein the first window is concurrently displayed on the display with the second window.

10. The method of claim 9, wherein the first processed video stream is displayed in the first window before the second processed video stream is displayed in the second window.

11. The method of claim 10, comprising:
displaying a still image in the second window when displaying first processed video stream in the first window; and
displaying a still image of the Field-Of-View (FOV) of the first one of the plurality of preset positions in the first window when displaying second processed video stream in the second window.

12. The method of claim 11, wherein:
the still image that is displayed in the second window when displaying first processed video stream in the first window comprises a still image of the Field-Of-View (FOV) of the second one of the plurality of preset positions; and
the still image that is displayed in the first window when displaying second processed video stream in the second window comprises a still image of the Field-Of-View (FOV) of the first one of the plurality of preset positions.

13. The method of any preceding claim, wherein the plurality of parameters for each of the plurality of preset positions include an audio output port identifier that identifies a respective one of a plurality of audio output ports of the PTZ video camera for directing an audio output signal from the Video Management System while the respective one of the plurality of preset positions is activated.

14. The method of any preceding claim, wherein the plurality of parameters for each of the plurality of preset positions include a video retention policy for retaining the respective stored processed video stream in the Video Management System.

15. A Video Management System comprising:
a Pan-Tilt-Zoom (PTZ) video camera configured to capture a video;
a controller for controlling the PTZ video camera, the controller is configured to:
store a plurality of preset positions of the PTZ video camera, wherein each of the plurality of preset positions of the PTZ video camera results in capturing a respective Field-Of-View (FOV);
store a plurality of parameters for each of the plurality of preset positions including a Pan setting, a Tilt setting, a Zoom setting, and one or more video processing parameters;
activate a first one of the plurality of preset positions, and in response, apply the Pan setting, the Tilt setting and the Zoom setting associated with the first one of the plurality of preset positions to the PTZ video camera to orient the PTZ video camera to achieve the respective FOV;
capture video of the respective FOV by the PTZ video camera;
process the video captured by the PTZ video camera by apply the one or more video processing parameters associated with the first one of the plurality of preset positions, resulting in a first processed video stream; and
store the first processed video stream.
